# EUROPÄISCHE PATENTSCHRIFT

(11) **EP 0 504 600 B1**
(45) Veröffentlichungstag und Bekanntmachung des Hinweises auf die Patenterteilung: **29.03.1995**
(21) Anmeldenummer: 92102645.6
(22) Anmeldetag: 18.02.1992
(51) Int. Cl.: C09C 1/00, C04B 35/48, C04B 35/26

(54) **Einschlusspigmente aus Zirkoniumsilikat mit Chromoxideinschlüssen, deren Herstellung und Verwendung**
Zirconium silicate occlusion pigments with chromium oxyde occlusions, their preparation and their use
Pigments d'occlusion de silicate de zirconium à occlusions d'oxyde de chrome, préparation et utilisation

(30) Priorität: 16.03.1991 DE 4108624
(43) Veröffentlichungstag der Anmeldung: 23.09.1992
(73) Patentinhaber: Degussa Aktiengesellschaft, 60311 Frankfurt (DE)
(72) Erfinder: Speer, Dietrich, Dr., W-6450 Hanau 9 (DE); Kiss, Akos, Dr., W-6450 Hanau 9 (DE); Kleinschmit, Peter, Prof., W-6450 Hanau 9 (DE); Horst, Jenny, W-6460 Gelnhausen (DE); Zell, Christel, W-6458 Rodenbach (DE)

(56) Entgegenhaltungen:
- BE-A- 668 253
- GB-A- 983 175
- TRANSACTIONS OF THE BRITISH CERAMIC SOCIETY Bd. 68, Nr. 5, September 1969,STOKE-ON-TRENT GB Seite 129A D. N. CROOK ZUSAMMENFASSUNG NR. 2298/69
- CHEMICAL ABSTRACTS, vol. 94, no. 20, 18. Mai 1981, Columbus, Ohio, US; abstract no. 161346y, D. BECHERESCU ET AL. Seite 287 ;Spalte R ;

## Beschreibung

Die Erfindung betrifft Einschlußpigmente auf der Basis von Zirkoniumsilikat als Hüllsubstanz und einem feinteiligen anorganischen Oxid als diskret eingeschlossener farbiger Verbindung, wobei als Oxid Chromoxid definierter Teilchengröße eingeschlossen ist. Die Erfindung richtet sich ferner auf ein Herstellverfahren, wobei Chromoxid in einer Festkörperreaktion in sich bildendes Zirkoniumsilikat eingeschlossen wird, sowie auf die Verwendung des Einschlußpigments zur Herstellung brillanthellgrüner keramischer Dekore.

Grünes Chromoxid (Cr₂O₃) wird aufgrund seiner relativ guten Farb- und Glasurstabilität schon lange als Pigment zur Einfärbung von keramischen Massen und Glasuren sowie als Unterglasurfarbe und Bestandteil von Dekorfarben zur Erzeugung keramischer Dekore verwendet.

Besonders gewünscht werden brillante hellgrüne Farbtöne. Wie bei vielen anderen Pigmenten hängt auch bei Chromoxid der Farbton vom mittleren Teilchendurchmesser (D₅₀-Wert) und der Teilchenverteilung ab. Die gewünschten brillanten hellgrünen Farbtöne liegen vor, wenn das Chromoxid eine mittlere Korngröße im Bereich um 0,1 bis 3,0 »m aufweist. Im CIE-Lab-System (Deutsche Industrie Normen 5033, 6164 und 6174) weisen solche Chromoxide meist Farbwerte im Bereich L = 30 bis 35, a = -15 bis -17 und b = 13 bis 16 auf - gemessen mit einer 5 gew.-%igen Einfärbung in einer Transparentglasur und Einbrennen bei 1060 °C. Grobteilige Chromoxide führen unter gleichen Testbedingungen zu Farbwerten um L = 20 bis 25, a = -12 bis -14 und b = 9 bis 12; solche grobteiligen Chromoxide sind also nicht nur dunkler, sondern sie wirken auch blaustichig, was vielfach als Nachteil angesehen wird.

Durch Mahlen lassen sich grobteilige dunkelgrüne Chromoxide auch in feinteilige hellgrüne Pigmente überführen. Die so erhaltenen Pigmente besitzen dann zwar die richtige Farbe, aber sie weisen den anwendungstechnischen Nachteil auf, daß sie sich aufgrund ihrer Feinteiligkeit schlechter für den Direktdruck zur Erzeugung keramischer Dekore eignen: Es kommt häufig zu Verwischungen gerade feiner Details des Dekors, und/oder die Übertragung des Dekors auf den zu dekorierenden keramischen Träger ist unvollständig. Im Unterglasurdekor neigt nicht eingeschlossenes Chromoxid insbesondere bei hohen Brenntemperaturen zur Oxidation und Freisetzung von Chromat, was sich im Schrägbrand durch Bildung gelber Verlaufsspuren bemerkbar macht.

Aufgabe der Erfindung ist, neue Pigmente auf der Grundlage von Chromoxid aufzufinden, die brillant hellgrün sind und sich ohne die vorgenannten Störungen zur Herstellung keramischer Dekore im Direktdruck eignen.

Es wurde gefunden, daß sich brillant hellgrünes, feinteiliges Chromoxid in Einschlußpigmente auf der Basis von Zirkoniumsilikat überführen läßt und auf diese Weise die Verbesserung der anwendungstechnischen Eigenschaften erzielt wird. Gegenstand der Erfindung sind somit Einschlußpigmente auf der Basis von Zirkoniumsilikat als Hüllsubstanz und einem feinteiligen anorganischen Oxid als diskret eingeschlossener farbiger Verbindung, welche dadurch gekennzeichnet sind, daß als anorganisches Oxid Chromoxid mit einer mittleren Teilchengröße (D₅₀-Wert) von 0,1 bis 3,0 »m eingeschlossen ist.

Einschlußpigmente auf der Basis von Zirkoniumsilikat als Hülle mit oxidischen farbigen Einschlüssen sind an sich bekannt - siehe beispielsweise AT-B 319133, EP-B 0 294 664, DE-A 39 06 819, DE-A 39 06 821 -, Einschlußpigmente mit Chromoxideinschlüssen wurden bisher aber nicht offenbart. Der Einschluß von feinteiligem Chromoxid lag auch nicht nahe, weil nicht-umhülltes Chromoxid eine ausreichende Glasurstabilität aufweist. Bevorzugte Einschlußpigmente enthalten Chromoxid mit einem engen Kornspektrum; 90 % der Cr₂O₃-Partikel sollen kleiner 5 »m, vorzugsweise 95 % kleiner 3 »m, sein. Bevorzugte Einschlußpigmente sind durch ein Kornspektrum zwischen etwa 0,5 und 30 »m, vorzugsweise zwischen etwa 3 und 20 »m, gekennzeichnet. Besonders vorteilhafte Einschlußpigmente weisen D₅₀-Werte zwischen 8 und 15 »m auf und enthalten weniger als 5 % Feinanteil unter 3 »m. Die D₅₀-Werte und Kornverteilung lassen sich mittels üblicher Bestimmungsmethoden, beispielsweise mittels Laserbeugung, ermitteln. Die erfindungsgemäßen Einschlußpigmente lassen sich herstellen durch Glühen eines Gemisches aus einer Quelle für Zirkoniumdioxid, einer Quelle für Siliziumdioxid, dem einzuschließenden feinteiligen anorganischen Oxid und üblichen Mineralisatoren bei 800 bis 1300 °C innerhalb von 0,5 bis 8 Stunden, wobei man als anorganisches Oxid Chromoxid mit einer mittleren Teilchengröße (D₅₀-Wert) von 0,1 bis 3,0 »m in einer Menge von üblicherweise 10 bis 20 Gew.-%, bezogen auf das zu glühende Gemisch, einsetzt.

Es war nicht vorhersehbar, daß die Umhüllung von feinteiligem Chromoxid mit D₅₀-Werten zwischen 0,1 und 3 »m, insbesondere zwischen 0,5 und 2 »m, mit in einer Festkörperreaktion sich bildendem Zirkoniumsilikat gelingt und damit brillant-hellgrüne Einschlußpigmente mit D₅₀-Werten im Bereich von im allgemeinen größer 3 »m bis 20 »m zugänglich werden, welche sich durch die verbesserten anwendungstechnischen Eigenschaften auszeichnen. Mit dem in der AT-B 319133 beschriebenen Verfahren können nämlich keineswegs alle denkbaren farbigen Verbindungen während des Bildungsprozesses der Zirkoniumsilikathülle von dieser in für Pigmentzwecke ausreichender Menge eingeschlossen werden. Die farbgebenden Komponenten können nämlich in vielen Fällen die Bildung von ZrSiO₄ aus ZrO₂ und SiO₂ verzögern oder verhindern, oder die angestrebten Pigmenteigenschaften werden nicht oder unvollständig erreicht.

Für die Herstellung der erfindungsgemäßen Einschlußpigmente können als Quelle für Zirkoniumdioxid beispielsweise Zirkoniumdioxid, bevorzugt ZrO₂ mit D₅₀-Werten zwischen 1 und 10 »m, Zirkonylhydrate - zugänglich durch Hydrolyse von Zirkonylhalogeniden - oder Tetraalkoxyzirkonate Verwendung finden, jedoch wird Zirkoniumdioxid bevorzugt. Als Quelle für Siliziumdioxid eignet sich bevorzugt feinteiliges Siliziumdioxid, jedoch sind auch SiO₂-reiche Zeolithe und Alkoxysilane bzw. -siloxane verwendbar. Die Quelle für ZrO₂ und die Quelle für SiO₂ werden im allgemeinen in etwa äquivalenter, d. h., ZrSiO₄ bildender Menge eingesetzt. Die Glühung des Reaktionsgemisches erfolgt vorzugsweise bei 1000 °C bis 1300 °C, wobei reduzierende oder oxidierende Bedingungen möglich sind. Als Mineralisatoren kommen die für die ZrSiO₄-Bildung üblichen in Betracht, inbesondere handelt es sich um Halogenide, besonders Fluoride und Chloride der Alkali- und/oder Erdalkalimetalle sowie um Alkalisilikofluoride. Nach dem Glühprozeß wird in an sich bekannter Weise aufgemahlen. Sofern erwünscht, kann der Mineralisator ausgewaschen werden.

Wie bereits angesprochen, lassen sich die erfindungsgemäßen Einschlußpigmente problemlos zur Herstellung brillanthellgrüner keramischer Dekore verwenden. Übertragungsprobleme und Störungen durch Konturenunschärfe durch Verschmierungen, wie sie mit feingemahlenem Chromoxid häufig auftreten, werden vermieden. Die Einschlußpigmente können mittels üblicher Drucktechniken, darunter Direktdruck mittels beispielweise Tampondruck und Siebdruck oder mittels Indirektdruck, beispielsweise unter Verwendung von Abziehbildern zur Herstellung keramischer Dekore Anwendung finden, wobei die Vorteile der Einschlußpigmente beim Direktdruck besonders deutlich zutage treten. Selbstverständlich lassen sich die erfindungsgemäßen Pigmente auch zur Einfärbung von Glasuren, Emaillen und keramischen Dekorfarben sowie zur Dekorierung oder Einfärbung nicht-keramischer Artikel, wie Kunststoffe, Lacke und Druckfarben, verwenden.

Durch die erfindungsgemäßen brillanthellgrünen Einschußpigmente konnte die Palette an Einschlußpigmenten auf Zirkoniumsilikatbasis erweitert werden. Dies ist in Dekorationsverfahren von Vorteil, weil derartige Pigmente, unabhängig von der eingeschlossenen farbgebenden Komponente, mit einem einzigen Anpastmedium angepastet werden können und es keiner auf die jeweilige Farbe bezogenen Anpassung der Rezeptur bedarf. Durch eine Pigmentpalette mit gleichen Oberflächeneigenschaften der einzelnen Pigmente gestaltet sich damit die Herstellung von Mehrfarbendekoren problemloser.

Außer den bereits genannten koloristischen und anwendungstechnischen Vorteilen zeichnen sich die erfindungsgemäßen Pigmente auch dadurch aus, daß sie als weniger toxisch einzustufen sind. Schließlich kommt es durch den Einschluß von Cr₂O₃ in der ZrSiO₄-Hülle auch unter stark oxidierenden Bedingungen bei der Anwendung zu einer geringeren Oxidation des Cr₂O₃ zu Chromat. Ausblutungserscheinungen werden damit minimiert. Die Temperaturstabilität der erfindungsgemäßen Pigmente reicht deutlich über 1400 °C, so daß sie auch zur Herstellung dekorierter Porzellane im Einbrandverfahren (Porzellan- und Dekorbrand erfolgen gleichzeitig) geeignet sind.

### Beispiel

Versatz:
51,4 g ZrO₂
25,7 g SiO₂
14,8 g Cr₂O₃ (D₅₀-Wert = 1 »m)
2,5 g NaF
2,0 g NaCl
Der Versatz wird 20 Minuten in Kugelmühlen innig vermahlen. Der Versatz wird in Schamotte-Tiegeln bei 1100 °C 2 Stunden geglüht. Anschließend wird durch Aufmahlen des Glühguts die gewünschte Kornverteilung eingestellt.

Zum Direktdruck wird das in organischem Medium angepastete Pigment mittels einer Rakel auf eine gravierte Edelstahlplatte übertragen, das Dekor von dieser mittels eines Silikontampons abgenommen und auf den Porzellanträger gedruckt; anschließend wird überglasiert und gebrannt. Während es unter Verwendung nicht eingeschlossenen feinteiligen Cr₂O₃-Pigments zu Verschmierungen kommt, bleiben die Dekore unter Verwendung der erfindungsgemäßen Pigmente konturenscharf und unverschmiert.

## Patentansprüche (Patentansprüche für folgende(n) Vertragsstaat(en): BE, CH, DE, FR, GB, IT, LI, NL)

1. Einschlußpigmente auf der Basis von Zirkoniumsilikat als Hüllsubstanz und einem feinteiligen anorganischen Oxid als diskret eingeschlossener farbiger Verbindung,
dadurch gekennzeichnet,
daß als anorganisches Oxid Chromoxid mit einer mittleren Teilchengröße (D₅₀-Wert) von 0,1 bis 3,0 »m eingeschlossen ist.

2. Verfahren zur Herstellung von Einschlußpigmenten des Anspruchs 1 durch Glühen eines Gemisches aus einer Quelle für Zirkoniumdioxid, einer Quelle für Siliziumdioxid, dem einzuschließenden feinteiligen anorganischen Oxid und üblichen Mineralisatoren bei 800 bis 1300 °C innerhalb von 0,5 bis 8 Stunden,
dadurch gekennzeichnet,
daß man als anorganisches Oxid Chromoxid mit einer mittleren Teilchengröße (D₅₀-Wert) von 0,1 bis 3,0 »m einsetzt.

3. Verfahren nach Anspruch 2,
dadurch gekennzeichnet,
daß man als Quelle für ZrO₂ Zirkoniumdioxid und als Quelle für SiO₂ Siliziumdioxid einsetzt und die Glühung bei 1000 bis 1300 °C durchführt.

4. Verwendung der Einschlußpigmente des Anspruchs 1 zur Herstellung brillant hellgrüner keramischer Dekore, insbesondere im Direktdruck.

## Patentansprüche (Patentansprüche für folgende(n) Vertragsstaat(en): ES)

1. Verfahren zur Herstellung von Einschlußpigmenten auf der Basis von Zirkoniumsilikat als Hüllsubstanz und einem feinteiligen anorganischen Oxid als diskret eingeschlossener farbiger Verbindung durch Glühen eines Gemisches aus einer Quelle für Zirkoniumdioxid, einer Quelle für Siliziumdioxid, dem einzuschließenden feinteiligen anorganischen Oxid und üblichen Mineralisatoren bei 800 bis 1300 °C innerhalb von 0,5 bis 8 Stunden,
dadurch gekennzeichnet,
daß man als anorganisches Oxid Chromoxid mit einer mittleren Teilchengröße (D₅₀-Wert) von 0,1 bis 3,0 »m einsetzt.

2. Verfahren nach Anspruch 1,
dadurch gekennzeichnet,
daß man als Quelle für ZrO₂ Zirkoniumdioxid und als Quelle für SiO₂ Siliziumdioxid einsetzt und die Glühung bei 1000 bis 1300 °C durchführt.

3. Verwendung der nach dem Verfahren des Anspruchs 1 oder 2 hergestellten Einschlußpigmente zur Herstellung brillant hellgrüner keramischer Dekore, insbesondere im Direktdruck.

## Claims (Claims for the following Contracting State(s): BE, CH, DE, FR, GB, IT, LI, NL)

1. Inclusion pigments based on zirconium silicate as coating material and a fine-particled inorganic oxide as discretely included coloured compound,
characterised in that
the inorganic oxide included is chromium oxide having an average particle size (D₅₀ value) of from 0.1 to 3.0 »m.

2. Process for the preparation of inclusion pigments according to claim 1 by calcining a mixture consisting of a source of zirconium oxide, a source of silicon dioxide, the fine-particled inorganic oxide to be included and conventional mineralisers, at 800°C to 1300°C within 0.5 to 8 hours,
characterised in that
the inorganic oxide used is chromium oxide having an average particle size (D₅₀ value) of from 0.1 to 3.0 »m.

3. Process according to claim 2,
characterised in that
the source of zirconium oxide used is ZrO₂ and the source of silicon dioxide used is SiO₂ and the calcination is carried out at from 1000 to 1300°C.

4. Use of the inclusion pigments according to claim 1 for the preparation of brilliant light green ceramic decorations, particularly in direct printing.

## Claims (Claims for the following Contracting State(s): ES)

1. Process for the preparation of inclusion pigments according to claim 1 by calcining a mixture consisting of a source of zirconium oxide, a source of silicon dioxide, the fine-particled inorganic oxide to be included and conventional mineralisers, at 800 to 1300 °C within 0,5 to 8 hours,
characterised in that
the inorganic oxide used is chromium oxide having an average particle size (D₅₀ value) of from 0,1 to 3,0 »m.

2. Process according to claim 1,
characterised in that
the source of zirconium oxide used is ZrO₂ and the source of silicon dioxide used is SiO₂ and the calcination is carried out at from 1000 to 1300 °C.

3. Use of the inclusion pigments obtained in the process according to claim 1 or 2 for the preparation of brillant light green ceramic decorations particularly in direct printing.

## Revendications (Revendications pour l'(les) Etat(s) contractant(s) suivant(s): BE, CH, DE, FR, GB, IT, LI, NL)

1. Pigments d'occlusion à base de silicate de zirconium comme substance enveloppe et d'un oxyde minéral finement divisé comme composé coloré occlus, caractérisé en ce que comme oxyde minéral est occlus de l'oxyde de chrome ayant une taille moyenne de particules (valeur D₅₀) de 0,1 à 3,0 »m.

2. Procédé de préparation de pigments d'occlusion de la revendication 1 par calcination d'un mélange d'une source de dioxyde de zirconium, d'une source de dioxyde de silicium, d'un oxyde minéral finement divisé à occlure et de minéralisateurs usuels, entre 800 et 1300°C pendant 0,5 à 8 heures,
caractérisé en ce que,
comme oxyde minéral, on utilise de l'oxyde de chrome ayant une grandeur moyenne de particules (valeur D₅₀) de 0,1 à 3,0 »m.

3. Procédé selon la revendication 2,
caractérisé en ce que,
on met en oeuvre comme source de ZnO₂ du dioxyde de zirconium et comme source de SiO₂ du dioxyde de silicium et on réalise la calcination entre 1000 et 1300°C.

4. Utilisation des pigments d'occlusion de la revendication 1 pour la préparation de décorations de céramique vert clair brillantes, en particulier en impression directe.

## Revendications (Revendications pour l'(les) Etat(s) contractant(s) suivant(s): ES)

1. Procédé de préparation de pigments d'occlusion de la revendication 1 par calcination d'un mélange d'une source de dioxyde de zirconium, dune source de dioxyde de silicium, d'un oxyde minéral finement divisé à occlure et de minéralisateurs usuels, entre 800 et 1300 °C pendant 0,5 à 8 heures,
caractérise en ce que,
comme oxyde minéral, on utilise de l'oxyde de chrome ayant une grandeur moyenne de particules (valeur D₅₀) de 0,1 à 3,0 »m.

2. Procédé selon la revendication 2,
caractérisé en ce que,
on met en oeuvre comme source de ZnO₂ du dioxyde de zirconium et comme source de SiO₂ du dioxyde de silicium et on réalise la calcination entre 1000 et 1300 °C.

3. Utilisation des pigments d'occlusion obtenus selon le procédé de la revendication 1 ou 2 pour la préparation de décorations de céramique vert clair brillantes, en particulier en impression directe.
